# EUROPÄISCHE PATENTSCHRIFT

(11) **EP 0 144 852 B1**
(45) Veröffentlichungstag und Bekanntmachung des Hinweises auf die Patenterteilung: **20.01.1993**
(21) Anmeldenummer: 84114002.3
(22) Anmeldetag: 20.11.1984
(51) Int. Cl.: A01K 7/06, F16K 21/04

(54) **Vieh-Tränkventil**
Drinking valve for animals
Soupape d'abreuvoir pour animaux

(30) Priorität: 02.12.1983 DK 5551/83; 11.02.1984 DE 8404184 U
(43) Veröffentlichungstag der Anmeldung: 19.06.1985
(73) Patentinhaber: Agerley, Jörgen, DK-6200 Aabenraa (DK); Werner, Konrad, D-24244 Felm (DE)
(72) Erfinder: Agerley, Jörgen, DK-6200 Aabenraa (DK); Werner, Konrad, D-24244 Felm (DE)
(74) Vertreter: Helber, Friedrich G., Dipl.-Ing.

(56) Entgegenhaltungen:
- US-A- 4 284 036

## Beschreibung

Die Erfindung betrifft ein Vieh-Tränkventil mit einer mit einem Wassereinlaß verbundenen Ventilkammer, die über eine von einer axialen zentralen Bohrung gebildeten und mittels einer Kugel schließbaren Leitung mit einem Wasserauslaß verbunden ist, sowie mit einem Betätigungsglied zur Steuerung der Wasserabgabe.

Ein derartiges Vieh-Tränkventil ist aus der US-A-4 284 036 bekannt. Bei dem bekannten Vieh-Tränkventil tritt das Wasser solange aus, solange das Betätigungsglied von dem Vieh niedergedrückt ist. Dabei ist bei dem bekannten Ventil nicht gewährleistet, daß das ausfließende Wasser von dem Vieh auch tatsächlich aufgenommen wird.

Ausgehend von diesem Stand der Technik liegt der Erfindung die Aufgabe zugrunde, ein Vieh-Tränkventil der eingangs genannten Art zu schaffen, bei welchem die austretende Wassermenge bei jeder Betätigung des Betätigungsgliedes, d.h. die Wasserabgabe, auf eine bestimmte Menge beschränkt ist. Erfindungsgemäß wird diese Aufgabe durch die kennzeichnenden Merkmale des Patentanspruchs 1 gelöst.

Danach ist zwischen der zentralen Hauptleitung und dem Wasserauslaß, d.h. in deren Leitungsweg, eine weitere Ventilkammer angeordnet.Diese zweite Ventilkammer ist über eine von einer außermittigen axialen Bohrung gebildete Nebenleitung mit der ersten Ventilkammer verbunden und durch die in der ersten Ventilkammer befindliche Kugel verschließbar.

Ferner ist zur Abdichtung der zweiten Ventilkammer gegen den Wasserauslaß eine Dichtungsscheibe vorgesehen, welche ein Teil des Betätigungsglieds ist und bei dessen Niederdrücken die Nebenleitung verschließt und den Wasserauslaß freigibt.

In vorteilhafter Weiterbildung der Erfindung ist ein die erste Ventilkammer von der zweiten Ventilkammer trennender Ventilsitz vorgesehen, welcher im oberen Bereich mit einer kegelförmigen, in die zentral verlaufende Hauptleitung einmündenden Ausnehmung und im unteren Bereich mit einer Sacklochbohrung versehen ist.

Gemäß einer zweckmäßigen Ausgestaltung der Erfindung besitzt das Vieh-Tränkventil eine in die Sacklochbohrung eingesetzte, sich gegen eine auf die Dichtungsscheibe aufgesetzte Sperrscheibe abstützende Druckfeder.

Entsprechend einer bevorzugten Ausführungsform der Erfindung ist vorgesehen, daß der Durchmesser der Hauptleitung den Durchmesser der Nebenleitung übersteigt.

Anhand eines in der Zeichnung dargestellten Ausführungsbeispiels der Erfindung sollen die Erfindung, besondere Ausgestaltungen der Erfindung sowie deren Vorteile näher erläutert und beschrieben werden.
Dabei zeigt:
- Fig. 1: eine Darstellung der einzelnen Bauteile eines Vieh-Tränkventils
- Fig. 2: eine Schnittansicht des Vieh-Tränkventils im geschlossenen Zustand,
- Fig. 3: eine Schnittansicht eines Vieh-Tränkventils bei niedergedrücktem Betätigungsglied, und
- Fig. 4: eine Ansicht eines Vieh-Tränkventils mit aufgesetztem Endstück, teilweise im Schnitt

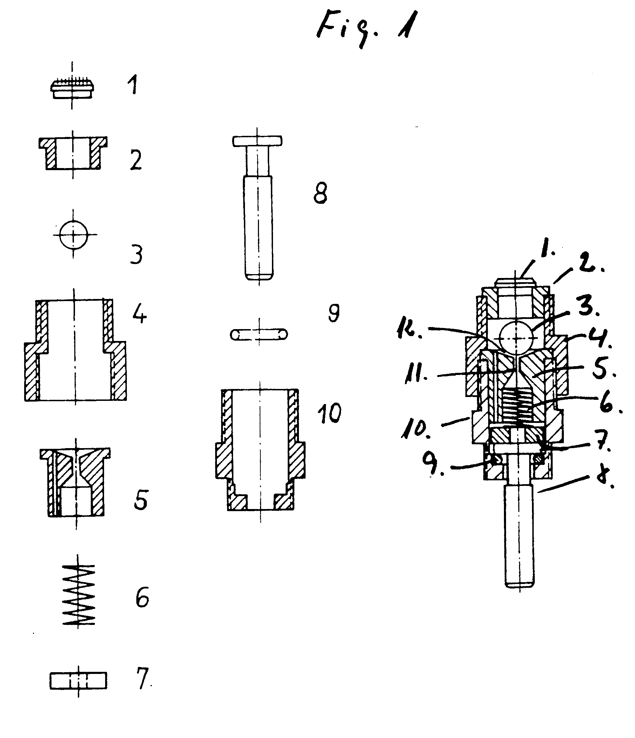

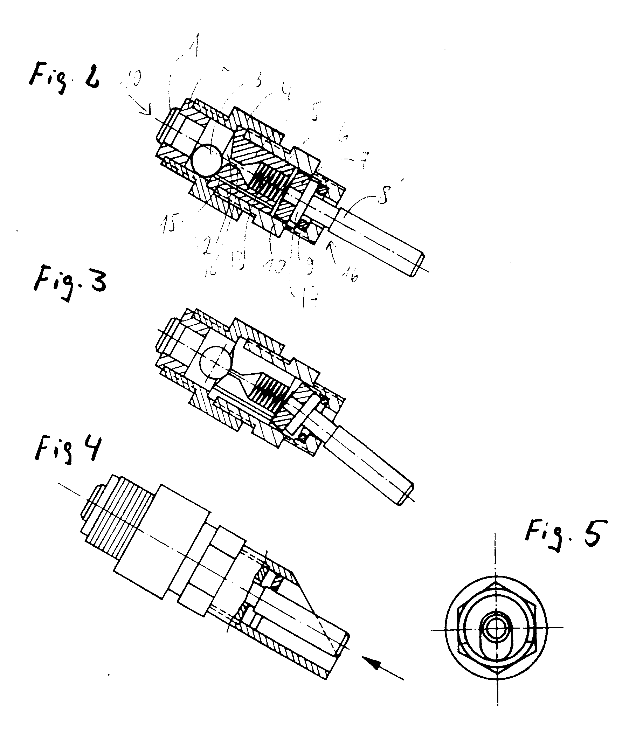

In Figur 1 sind die einzelnen Bauelemente eines Ausführungsbeispieles des erfindungsgemäßen Tränkventils dargestellt, nämlich der Filter 1, der Filterhalter 2, die Kugel 3, das Gehäuseelement 4, der Ventilsitz 5, die Feder 6, das Gehäuseelement 7, das Betätigungsglied 8, der Dichtungsring 9 und das Gehäuseelement 10.

Anhand der Figuren 2 und 3 soll jetzt die Funktionsweise des Ventils erläutert werden. Solange das Betätigungsglied 8 nicht herabgedrückt wird, liegt die in dem Bereich zwischen dem Wassereinlaß 11 und dem Ventilsitz 5 frei bewegliche Stahlkugel 3 vor einer außermittig angeordneten, eine Nebenleitung 15 bildenden zweiten axialen Bohrung. Offen ist in diesem Zustand der Wasserdurchfluß von dem Wassereinlaß 11 durch den Raum zwischen dem Wassereinlaß 11 und dem Ventilsitz 5, die kegelförmige Ausnehmung 12, die die Hauptleitung 14 bildende erste, zentrale axiale Bohrung, die Sacklochbohrung 13, und den Bereich zwischen dem unteren Ende des Ventilsitzes 5 in den Bereich zwischen der Dichtungsscheibe 17 und dem Gehäuseelement 10. Der Austritt des Wassers aus dem Wasserauslaß 16 ist gesperrt, da die einen Teil des Betätigungsgliedes 8 bildende Dichtungsscheibe 17 durch Wasser- und Federdruck fest gegen den Dichtungsring 9 gepreßt wird.

Bei Herabdrücken des Betätigungsgliedes 8 in die in Figur 3 gezeigte Stellung ist für einen kurzen Moment der Weg vom Wassereinlaß 11 zum Wasserauslaß 16 offen, da die Kugel 3 zunächst in der in Figur 2 gezeigten Stellung verharrt, andererseits aber die Dichtungsscheibe 17 von dem Dichtungsring 9 entfernt wird, so
daß ein freier Durchlauf möglich ist. Die dabei entstehende Wasserströmung im Bereich zwischen dem Wassereinlaß 11 und der die Hauptleitung 14 bildenden ersten axialen Bohrung bewirkt eine Verlagerung der Kugel 3 in den Bereich der kegelförmigen Ausnehmung 12. Die Stahlkugel 3 versperrt somit kurze Zeit nach Betätigung des Betätigungsgliedes 8 den Wasserstom von dem Wassereinlaß 11 zu dem Wasserauslaß 16. Die bei der Betätigung des Betätigungsgliedes 8 durch das Ventil stömende Wassermenge ist daher begrenzt.

Auch die die Nebenleitung 15 bildende zweite axiale Bohrung, die bei Verlagerung der Kugel 3 freigegeben worden ist, ist gesperrt, da die Sperrscheibe 7 bei Niederdrücken des Betätigungsgliedes 8 , wie in Figur 3 gezeigt, diese die Nebenleitung 15 bildende zweite axiale Bohrung versperrt.

Die Kugel 3 verharrt in der in Figur 3 gezeigten Stellung, bis das Betätigungsglied 8 wieder freigegeben wird. In diesem Moment gibt die Sperrscheibe 7 die untere Öffnung der zweiten axialen Bohrung 15 wieder frei, was einen Wasserstrom von dem Bereich zwischen Wassereinlaß 11 und Ventilsitz 5 bewirkt. Die Schwerkraft und der Wasserstrom durch die Nebenleitung 15 verursachen eine Verlagerung der Kugel 3 aus dem Bereich der kegeligen Ausnehmung 12 zurück in die in Figur 2 gezeigte Stellung.

Das erfindungsgemäße Tränkventil weist also zwei Sperrelemente auf, nämlich die Kugel 3 und die Dichtungsscheibe 17. Ein Lösen der Dichtungsscheibe 17 von dem Dichtungsring bewirkt automatisch nach kurzer Zeit eine Verlagerung der Stahlkugel 3 derart, daß diese den Wasserweg sperrt. Nachdem durch das Loslassen des Betätigungsgliedes 8 bewirkten Sperren des Wasserweges zwischen Dichtungsscheibe 17 und Dichtungsring 9 öffnet die Kugel 3 den Wasserweg zwischen dem Wassereinlaß 11 und der Sackbohrung 13 unter gleichzeitigem Sperren der durch die zweite Bohrung gebildeten Nebenleitung 15.

Durch die Wahl des Winkels , unter dem das Ventil zur Horizontalen nach unten geneigt angebracht ist, kann die bei jeder Betätigung des Betätigungsgliedes herausströmende Wassermenge bestimmt werden: Je größer der Winkel zu der Horizontalen ist, um so geringer ist die jeweils austretende Wassermenge, da die Kugel 3 schon bald nach Betätigung des Betätigungsgliedes die Hauptleitung 14 versperrt.

## Patentansprüche

1. Vieh-Tränkventil mit einer mit einem Wassereinlaß (11) verbundenen ersten Ventilkammer, die über eine mittels einer in der Ventilkammer befindlichen Kugel (3) verschließbare von einer zentralen axialen Bohrung gebildete Leitung (14) mit einem Wasserauslaß (16) verbunden ist, und mit einem Betätigungsglied (8) zur Steuerung der Wasserabgabe,
dadurch gekennzeichnet, daß
eine zweite Ventilkammer in dem Leitungsweg der Leitung (14) vorgesehen ist, daß eine von einer außermittigen axialen Bohrung gebildete Nebenleitung (15) vorgesehen ist, die die erste Ventilkammer mit der zweiten Ventilkammer verbindet und mittels der Kugel (3) verschließbar ist, daß zur Abdichtung der zweiten Ventilkammer gegen den Wasserauslaß (16) eine Dichtungsscheibe (17) vorgesehen ist, welche mit dem Betätigungsglied (8) verbunden ist und bei dessen Niederdrücken die Nebenleitung (15) verschließt und den Wasserauslaß (16) freigibt.

2. Vieh-Tränkventil nach Anspruch 1, dadurch gekennzeichnet, daß ein die erste Ventilkammer von der zweiten Ventilkammer trennender Ventilsitz (5) vorgesehen ist, welcher im oberen Bereich mit eine kegelförmigen, in die zentral verlaufende Hauptleitung (14) einmündenden Ausnehmung (12) und im unteren Bereich mit einer Sacklochbohrung (13) versehen ist.

3. Vieh-Tränkventil nach Anspruch 2, dadurch gekennzeichnet, daß eine in die Sacklochbohrung (13) eingesetzte, sich gegen eine auf die Dichtungsscheibe (17) aufgesetzte Sperrscheibe (7) abstützende Druckfeder (6) vorgesehen ist.

4. Vieh-Tränkventil nach einem der vorherigen Ansprüche, dadurch gekennzeichnet, daß der Durchmesser der Hauptleitung (14) den Durchmesser der Nebenleitung (15) übersteigt.

## Claims

1. Drinking valve for livestock with a first valve chamber which is connected to a water inlet (11) and which is connected to a water outlet (16) via a conduit (14) which is defined by a central axial bore and may be sealed by means of a ball (3) situated in the valve chamber, and with an actuating element (18) for controlling the water delivery, characterised in that a second valve chamber is provided in the flow path of the conduit (14), that an auxiliary conduit (15) is provided which is defined by an eccentric axial bore and which connects the first valve chamber to the second valve chamber and may be sealed by means of the ball (3), that for the purpose of sealing the second valve chamber with respect to the water outlet (16) a sealing disc (17) is provided which is connected to the actuating element (8) and which seals the auxiliary conduit (15) and opens the water outlet (16) when it is depressed.

2. Drinking valve for livestock as claimed in claim 1, characterised in that a valve seat (5) is provided which separates the first valve chamber from the second valve chamber and which is provided in its upper region with a tapered recess (12) which opens out into the centrally extending main conduit (14) and in its lower region with a blind bore (13).

3. Drinking valve for livestock as claimed in claim 2, characterised in that a compression spring (6) is provided which is inserted in the blind bore (13) and bears against a blocking disc (7) placed on the sealing disc (17).

4. Drinking valve for livestock as claimed in one of the preceding claims, characterised in that the diameter of the main conduit (14) exceeds the diameter of the auxiliary conduit (15).

## Revendications

1. Soupape d'abreuvoir à bétail, comportant une première chambre de soupape, reliée à une admission d'eau (11) et reliée à un évacuation d'eau (16), par l'intermédiaire d'une conduite (14) formée par un perçage axial central et susceptible d'être obturée par une bille (3) se trouvant dans la chambre de soupape, et avec un organe d'actionnement (8) destiné à commander la fourniture d'eau, caractérisé en ce qu'une deuxième chambre de soupape est prévue sur le chemin de la conduite (14), en ce qu'est prévue une conduite de dérivation (15), formée par un perçage axial excentré, qui relie la première chambre de soupape à la deuxième chambre de soupape et est susceptible d'être obturée par la bille (3), en ce que, pour isoler de façon étanche la deuxième chambre de soupape par rapport à l'évacuation d'eau (16), est prévu un disque d'étanchéité (17) relié à l'organe d'actionnement (8) et qui, lors de son enfoncement, obture la conduite de dérivation (15) et libère l'évacuation d'eau (16).

2. Soupape d'abreuvoir à bétail selon la revendication 1, caractérisé en ce qu'est prévu un siège de soupape (5), qui sépare la première chambre de soupape de la deuxième chambre de soupape et est pourvu, dans la zone supérieure, d'un évidement conique (12), qui débouche dans la conduite principale (14) qui s'étend centralement, et est pourvu, dans la zone inférieure, d'un trou borgne (13).

3. Soupape d'abreuvoir à bétail selon la revendication 2, caractérisé en ce qu'est prévu un ressort de pression (6), inséré dans le trou borgne (13) et prenant appui contre un disque de barrage (7) appliqué sur le disque d'étanchéité (17).

4. Soupape d'abreuvoir à bétail selon l'une des revendications précédentes, caractérisé en ce que le diamètre de la conduite principale (14) dépasse le diamètre de la conduite de dérivation (15).
